# EUROPEAN PATENT APPLICATION

(11) **EP 1 158 730 A2**
(43) Date of publication of application: **28.11.2001**
(21) Application number: 01112011.0
(22) Date of filing: 23.05.2001
(51) Int. Cl.: H04L 12/56

(54) **Dynamic application port service provisioning for packet switch**

(30) Priority: 24.05.2000 US 206617 P; 24.05.2000 US 206996 P; 24.07.2000 US 220335 P
(71) Applicant: Alcatel Internetworking (PE), Inc., Spokane, Washington 99206 (US)
(72) Inventor: Clear, David, San Jose, CA 95123 (US); Michels, Timothy S., Gilroy, CA 95020 (US); Davis, Greg W., Spokans, Wa 99206 (US); Tallegas, Mathieu, Verdale, WA 99037 (US)
(74) Representative: Dreiss, Fuhlendorf, Steimle & Becker

(57) **Abstract**

A packet switching node has first and second forwarding engines interconnected over a first path dependent on an inspection engine and a second path independent of the inspection engine. The first forwarding engine identifies a first session in which an application port number is to be dynamically negotiated for a second session and directs the first session to the first path. The inspection engine monitors a dynamic application port number negotiation for the first session, determines a dynamic application port number for the second session, configures a service level for the second session on the forwarding engines and directs the second session to the second path. The first forwarding engine also identifies a third session in which an application port number is statically assigned and directs the third session to the second path.

## Description

### CROSS-REFERENCE TO RELATED APPLICATION(S)

The present application claims the priority of U.S. Provisional Application No. 60/206,996 entitled "Flow Resolution Logic System and Method" filed May 24, 2000, U.S. Provisional Application No. 60/206,617 entitled "System and Method for Enhanced Line Cards" filed May 24, 2000, and U.S. Provisional Application No. 60/220,335 entitled "Programmable Packet Processor" filed July 24, 2000, the contents of all of which are fully incorporated by reference herein. The present application contains subject matter related to the subject matter disclosed in U.S. Patent Application No. 09/751,194 entitled "Programmable Packet Processor with Flow Resolution Logic" filed December 28, 2000, the contents of which are fully incorporated by reference herein.

### FIELD OF THE INVENTION

The present application is related to packet switching, and particularly to a method and apparatus for providing dynamic application port service provisioning for a packet switch.

### BACKGROUND OF THE INVENTION

There is an increasing desire to tailor packet switched networks to the individualized needs of customers. Two areas of customization of packet switched networks to meet individualized needs are application-level Quality of Service (QoS) and billing. In order to provide application-level QoS and billing in packet switched networks, packet switching nodes in the network should be able to determine the application to which each packet relates and provide QoS and billing for the packet in accordance with the application.

Applications are determinable by reference to a TCP/UDP application port number in each packet. When a conversation occurs between a host and a server, packets originating from the host will apply the application port number to a destination port field, whereas packets originating from the server will apply the application port number to a source port field. These application port numbers may either be standardized port numbers that have been statically assigned to applications by the IETF or non-standard port numbers that are dynamically negotiated between the host and the server on a per session basis. Packet switching nodes can be statically configured to provide customized application-level QoS and billing for sessions utilizing standardized application port numbers. However, for sessions utilizing non-standard application port numbers that are dynamically negotiated, the application to which the session relates must be resolved in order to provide application-level QoS and billing for packets within the session.

The process of dynamically negotiating application port numbers is often complex. Different dynamic application port numbers are assigned each session and assignment is often based on random components. Additionally, each application typically employs a different negotiating technique. For some applications, the negotiation spans multiple packets so that "state" must be monitored in the packet switching node in order to correctly determine the application port number resulting from the negotiation.

There is therefore a need for a packet switching node that can efficiently and non-intrusively provide application-level QoS and billing for sessions employing dynamically negotiated application port numbers.

### SUMMARY OF THE INVENTION

In one embodiment of the present invention, a packet switching node for receiving and transmitting packets is provided. The packet switching node receives and transmits packets for one or more sessions. The packet switching node comprises an inspection engine, and first and second forwarding engines. The inspection engine is used to determine an application port by monitoring a first session in which the application port is negotiated. The first and second forwarding engines are interconnected on a first path dependent on the inspection engine and a second path independent of the inspection engine. The first forwarding engine identifies the first session, and directs the first session to the first path.

In another embodiment of the present invention, a method of assigning an application port to one or more sessions is provided. A first forwarding engine receives a plurality of packets for the sessions, and identifies a first session in which the application port is to be negotiated. The first session is directed to an inspection engine. The inspection engine determines the application port for a second session by monitoring the application port negotiation.

### BRIEF DESCRIPTION OF THE DRAWINGS

These and other aspects of the invention may be understood by reference to the following detailed description, taken in conjunction with the accompanying drawings, which are briefly described below.
FIG. 1 illustrates a network environment including a packet switching node in which one embodiment of the present invention may be used;
FIG. 2 is a block diagram of a switching interface in an embodiment according to the present invention;
FIG. 3 is a block diagram of a programmable packet switching controller in an embodiment according to the present invention;
FIG. 4 is a block diagram of a packet switching node in an embodiment according to the present invention coupled to a host and a server; and
FIG. 5 is a flow diagram of dynamic application port service provisioning in an embodiment according to the present invention.

### DETAILED DESCRIPTION

### I. Overview

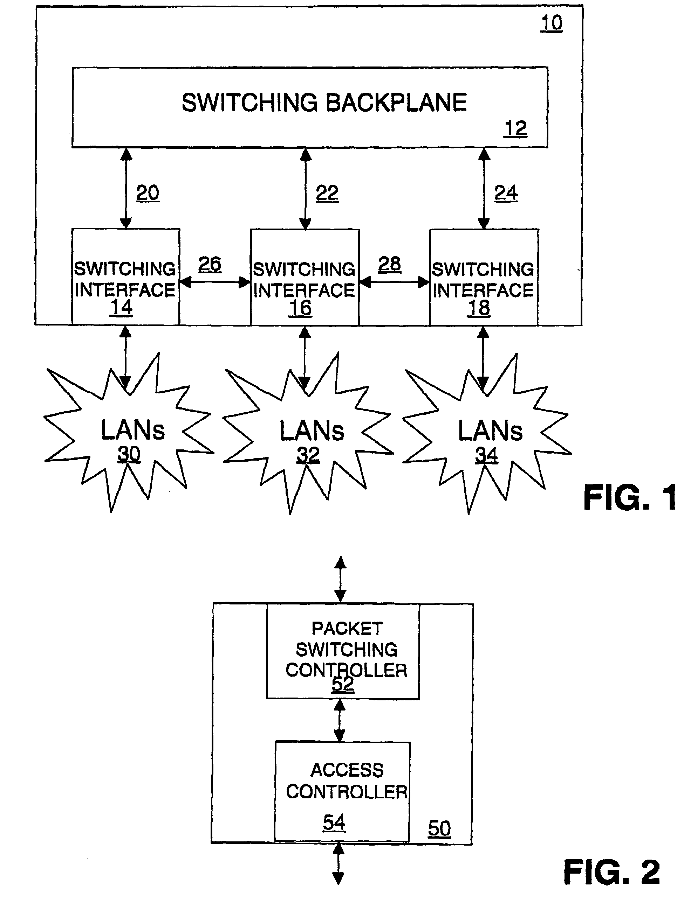

In FIG. 1, network environment including a packet switching node 10 is illustrated. The packet switching node may also be referred to as a switch, a data communication node or a data communication switch. The packet switching node 10 includes switching interfaces 14, 16 and 18 interconnected to respective groups of LANs 30, 32, 34, and interconnected to one another over data paths 20, 22, 24 via switching backplane 12. The switching backplane 12 preferably includes switching fabric. The switching interfaces may also be coupled to one another over control paths 26 and 28.

The switching interfaces 14, 16, 18 preferably forward packets to and from their respective groups of LANs 30, 32, 34 in accordance with one or more operative communication protocols, such as, for example, media access control (MAC) bridging and Internet Protocol (IP) routing. The switching node 10 is shown for illustrative purposes only. In practice, packet switching nodes may include more or less than three switching interfaces. Further, the packet switching nodes may also interface with computer networks other than LANs, such as, for example, WANs (Wide Area Networks) and MANs (Metropolitan Area Networks).

FIG. 2 is a block diagram of a switching interface 50 in an embodiment according to the present invention. The switching interface 50 may be similar, for example, to the switching interfaces 14, 16, 18 of FIG. 1. The switching interface 50 includes an access controller 54 coupled between LANs and a packet switching controller 52. The access controller 54, which may, for example, include a media access controller (MAC), preferably receives inbound packets off LANs, performs flow-independent physical and MAC layer operations on the inbound packets and transmits the inbound packets to the packet switching controller 52 for flow-dependent processing. The access controller 54 preferably also receives outbound packets from the packet switching controller 52 and transmits the packets on LANs. The access controller 54 may also perform physical and MAC layer operations on the outbound packets prior to transmitting them on LANs.

The packet switching controller 52 preferably is programmable for handling packets having wide variety of communications protocols. The packet switching controller 52 preferably receives inbound packets, classifies the packets, modifies the packets in accordance with flow information and transmits the modified packets on switching backplane, such as the switching backplane 12 of FIG. 1. The packet switching controller 52 preferably also receives packets modified by other packet switching controllers via the switching backplane and transmits them to the access controller 54 for forwarding on LANs. The packet switching controller 52 may also subject selected ones of the packets to egress processing prior to transmitting them to the access controller 54 for forwarding on LANs.

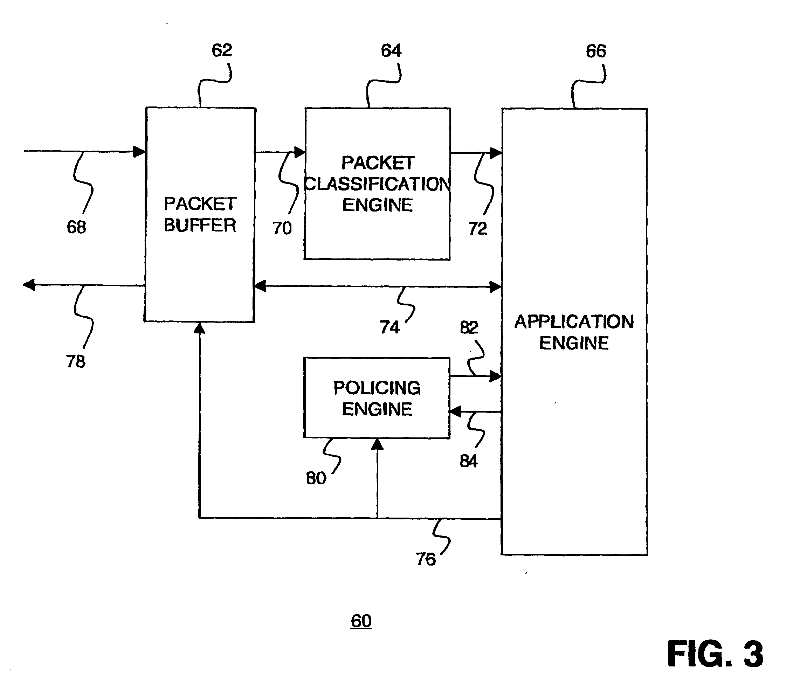

FIG. 3 is a block diagram of a programmable packet switching controller 60 in an embodiment according to the present invencion. The programmable packet switching controller 60, for example, may be similar to the packet switching controller 52 of FIG. 2. The programmable packet switching controller 60 preferably has flow resolution logic for classifying and routing incoming flows of packets. Due to its programmable nature, the programmable packet switching controller preferably provides flexibility in handling many different protocols and/or field upgradeability. The programmable packet switching controller may also be referred to as a packet switching controller, a switching controller, a programmable packet processor, a network processor, a communications processor or as another designation commonly used by those skilled in the art.

The programmable packet switching controller 60 includes a packet buffer 62, a packet classification engine 64, an application engine 66 and a policing engine 80. Packet switching controllers in other embodiments may include more or less components. For example, a packet switching controller in another embodiment may include a pattern match module for comparing packet portions against a predetermined pattern to look for a match. The packet switching controller in yet another embodiment may include an edit module for editing inbound packets to generate outbound packets. The packet switching controller in still other embodiments may contain more than one of one or more of the packet buffer, the packet classification engine, the application engine, the policing engine, and/or other components for array switching, in which packets are processed in multiple processing paths.

The programmable packet switching controller 60 preferably receives inbound packets 68. The packets may include, but are not limited to, Ethernet frames, ATM cells, TCP/IP and/or UDP/IP packets, and may also include other Layer 2 (Data Link/MAC Layer), Layer 3 (Network Layer) or Layer 4 (Transport Layer) data units. For example, the packet buffer 62 may receive inbound packets from one or more Media Access Control (MAC) Layer interfaces over the Ethernet.

The received packets preferably are stored in the packet buffer 62. The packet buffer 62 may include a packet FIFO for receiving and temporarily storing the packets. The packet buffer 62 preferably provides the stored packets or portions thereof to the packet classification engine 64 and the application engine 66 for processing.

The packet buffer 62 may also include an edit module for editing the packets prior to forwarding them out of the switching controller as outbound packets 78. The edit module may include an edit program construction engine for creating edit programs real-time and/or an edit engine for modifying the packets. The application engine 66 preferably provides application data 76, which may include a disposition decision for the packet, to the packet buffer 62, and the edit program construction engine preferably uses the application data to create the edit programs. The outbound packets 78 may be transmitted over a switching fabric interface, such as, for example, the switching backplane 12 of FIG. 1, to communication networks, such as, for example, the Ethernet.

The packet buffer 62 may also include either or both a header data extractor and a header data cache. The header data extractor preferably is used to extract one or more fields from the packets, and to store the extracted fields in the header data cache as extracted header data. The extracted header data may include, but are not limited to, some or all of the packet header. In an Ethernet system, for example, the header data cache may also store first N bytes of each frame.

The extracted header data preferably is provided in an output signal 70 to the packet classification engine 64 for processing. The application engine may also request and receive the extracted header data over an interface 74. The extracted header data may include, but are not limited to, one or more of Layer 2 MAC addresses, 802.1P/Q tag status, Layer 2 encapsulation type, Layer 3 protocol type, Layer 3 addresses, ToS (type of service) values and Layer 4 port numbers. In other embodiments, the output signal 70 may include the whole inbound packet, instead of or in addition to the extracted header data. In still other embodiments, the packet classification engine 64 may be used to edit the extracted header data to be placed in a format suitable for use by the application engine, and/or to load data into the header data cache.

The packet classification engine 64 preferably includes a programmable microcode-driven embedded processing engine. The packet classification engine 64 preferably is coupled to an instruction RAM (IRAM) (not shown). The packet classification engine preferably reads and executes instructions stored in the IRAM. In one embodiment, many of the instructions executed by the packet classification engine are conditional jumps. In this embodiment, the classification logic includes a decision tree with leaves at the end points that preferably indicate different types of packet classifications. Further, branches of the decision tree preferably are selected based on comparisons between the conditions of the instructions and the header fields stored in the header data cache. In other embodiments, the classification logic may not be based on a decision tree.

In an embodiment according to the present invention, the application engine 66 preferably has a pipelined architecture wherein multiple programmable sub-engines are pipelined in series. Each programmable sub-engine preferably performs an action on the packet, and preferably forwards the packet to the next programmable sub-engine in a "bucket brigade" fashion. The packet classification engine preferably starts the pipelined packet processing by starting the first programmable sub-engine in the application engine using a start signal 72. The start signal 72 may include identification of one or more programs to be executed in the application engine 66. The start signal 72 may also include packet classification information. The programmable sub-engines in the application engine preferably have direct access to the header data and the extracted fields stored in the header data cache over the interface 74.

The application engine may include other processing stages not performed by the programmable sub-engines, however, the decision-making stages preferably are performed by the programmable sub-engines to increase flexibility. In other embodiments, the application engine may include other processing architectures.

The disposition decision included in the application data 76 preferably is also provided to the policing engine 80. The policing engine 80 preferably also receives one or more policing IDs 84. The policing engine 80 preferably uses the disposition decision and the policing IDs to generate one or more policing recommendations 82. The policing recommendations may be a type of disposition recommendation, and may also be referred to as policing results. The policing recommendations preferably are provided to the application engine 66 to be used together with other disposition recommendations to generate application data, which may include the disposition decision.

### II. Dynamic Application Port Service Provisioning

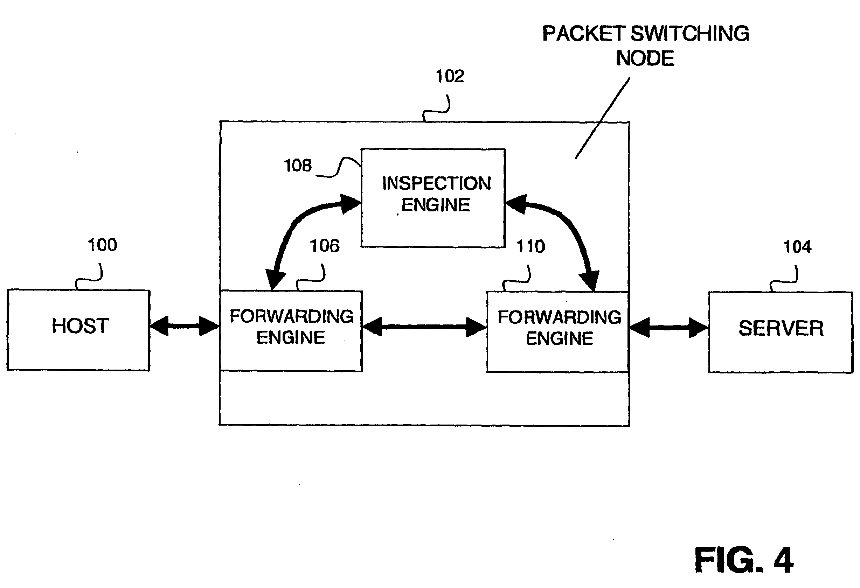

FIG. 4 is a block diagram of a packet switching node 102 in an embodiment according to the present invention, coupled to a host 100 and a server 104. The packet switching node 102 may be a part of one or more LANs, WANs, MANs, and may be coupled to other LANs, WANs, MANs, hosts, servers, and the like, over a computer network, such as, for example, the Internet or an Intranet. The host 100 and the server 104 may be a part of the same LAN or they may be a part of different LANs. Further, there may be one or more other packet switching nodes, in addition to the packet switching node 102, between the host 100 and the server 104.

The packet switching node 102 includes a forwarding engine 106, an inspection engine 108 and a forwarding engine 110. The packet switching node 102 may also include other components (not shown), such as, for example, one or more of, without being limited to, a switching fabric, media access controllers (MACs), CPUs, memories (e.g., databases), and the like, to facilitate conversations between the host 100 and the server 104 as well as other hosts and servers, which may be coupled to the packet switching node 102.

The inspection engine 108 may be implemented in a CPU subsystem in an embodiment according to the present invention. Inspection engines in other embodiments may be implemented in hardware (e.g., ASIC) or may be implemented as a combination of hardware and software.

The forwarding engines 106 and 110 may be similar to the packet switching controller 52 of FIG. 2 and/or the packet switching controller 60 of FIG. 3. Accordingly, the forwarding engines 106 and 110 may include other components (not shown), such as, for example, one or more of, without being limited to, a classification engine, a policing engine, an editing engine, databases, and the like, for classifying and routing packets with appropriate editing and policing. Further, the packet switching node 102 may include additional forwarding engines. For example, packet switching nodes in other embodiments may include 4, 8, 12, 16, 32, 64 or different number of forwarding engines.

Both the host 100 and the server 104 preferably send and receive packets directed to one another. The packets may include, but are not limited to, Ethernet frames, ATM cells, TCP/IP and/or UDA/IP packets, and may also include other Layer 2 (Data Link/MAC Layer), Layer 3 (Network Layer) or Layer 4 (Transport Layer) data units. Therefore, for example, both the host 100 and the server 104 may include a media access controller (MAC) for receiving and transmitting Ethernet frames.

For instance, the host 100 may request a Web page from the server 104 by sending one or more packets requesting the Web page using TCP/IP protocol. The server 104 may then send the Web page to the host 100 as one or more packets. The host 100 may then send one or more packets back to the server 104 to acknowledge the receipt of the Web page. These transmission and receiving of packetized information are performed via the packet switching node 102. A series of one or more transmission and receiving of packets between the host 100 and the server 104 may be referred to as a session.

The forwarding engines 106, 110 and the inspection engine 108 may be viewed as forming two paths for packets between the host 100 and the server 104, in which the packets may enter from either the host 100 or the server 104. For example, a path from the forwarding engine 106 via the inspection engine 108 to the forwarding engine 110 may be viewed as a first path, and a path from the forwarding engine 106 directly to the forwarding engine 110 may be viewed as a second path.

In both the first and second paths, a conversation (transmission and receiving of packets) between the host 100 and the server 104 preferably are bi-directional. During the conversation between the host 100 and the server 104, the host 100 preferably applies the application port number to a destination port field, whereas the server 104 preferably applies the application port number to a source port field. In other embodiments, there may be more than two paths between the host 100 and the server 104.

During communications between the host 100 and the server 104, the forwarding engine 106 or the forwarding engine 110 receives one or more packets from the host 100 or the server 104, respectively. If the packet belongs to an application in which the application port number has been statically assigned, the receiving forwarding engine preferably determines the static application port number, and preferably transmits the packet directly to the other forwarding engine over the second path, and the session is directed to the second path. For example, Hypertext Transfer Protocol (HTTP) is a type of application where the application port number is typically statically assigned, and only one session (over the second path) is used to transfer data bi-directionally between the host 100 and the server 104.

On the other hand, however, if the packet belongs to an application in which the application port number is to be assigned dynamically, the receiving forwarding engine preferably sends the packet to the inspection engine 108 on the first path, and the session preferably is directed to the first path. In an exemplary session, the forwarding engine 106 preferably receives a packet from the host 100. The forwarding engine 106 preferably detects a start of a control session for an application that is going to negotiate the application port dynamically. Similarly, when the server 104 initiates the dynamic negotiation of application port, the forwarding engine 110 preferably detects the start of a control session.

For dynamic application port negotiation, multiple sessions, e.g., two sessions, are typically established, including the control session and a data session. The control session, as described above, is a session between the host 100 and the server 104 that negotiates the dynamic port for the data session. The control session typically uses a well-known port, which may also be referred to as a static port. Then, the data session uses the dynamic port that has been negotiated between the host 100 and the server 104. Typically, most of the data transfer between the host 100 and the server 104 takes place during the data session.

The applications that use dynamic application port negotiation may include one or more of, but are not limited to, File Transfer Protocol (FTP) and Voice over IP (VoIP). Different QoS, statistics group, policing, bandwidth, provisioning, and the like may be provided to these and other different applications. These different treatments may also be based on the customer using the service, in addition to, or instead of the type of application being used. The statistics group typically comprises, but is not limited to, amount of traffic, size of file transfer, time of day, customer identification, and/or number of bytes. The statistics group may be used for one or more of billing, auditing, network management, traffic profiling, and the like.

The control session for each of these applications preferably takes place using an associated well-known (or static) port. For example, file transfer protocol (FTP) has a well-known port defined by IETF (Internet Engineering Task Force), e.g., in Request for Comments (RFC) 1700 entitled "Assigned Numbers," which is well known to those skilled in the art. Thus, when the FTP is the application, the associated well-known port is used for the control session.

When a node (host 100 or server 104) wants to request a file from the other node using FTP, it preferably initiates a control session using the well-known port. The node-side forwarding engine looks for the start of the control session directed at the well-known control port for the FTP that indicates start of the dynamic application port negotiation. The start of the control session may be detected by looking for setting of a SYN (synchronization) flag in the TCP header in an embodiment according to the present invention. The initiating node (the host or server) preferably sends an initial packet with the SYN bit set, and the responder (the host or server) preferably sends an acknowledging packet with a SYN ACK (synchronization acknowledgement) bit set.

During the control session, the host 100 and the server 104 use the semantics as defined by FTP to dynamically negotiate an application port, which may be different for different sessions. Once the dynamic port negotiation has been completed, the control session preferably is discontinued, and both the host 100 and the server 104 preferably switch over to a data session, during which the FTP file transfer takes place, using the application port number that was negotiated during the control session. In the transition between the control session and the data session, the traffic between the host 100 and the server 104 is redirected from the first path to the second path.

For another example, similar scheme may be used for Voice over IP (VoIP) application. In VoIP applications, a control session may be used to negotiate an application port that will carry voice data and once the application port has been negotiated, then the negotiated application port may be used to actually carry the voice data.

Once the traffic is diverted to the first path (via the inspection engine), all of the frames (packets) for the control session going both directions between the host 100 and the server 104 go through the inspection engine 108. The inspection engine 108 preferably captures those frames, inspects them and forwards them unedited, except for single hop routing edits if required. The inspection engine does not affect the dynamic negotiation; rather, it monitors the dynamic negotiation between the host and the server. This technique of monitoring application control session used in an embodiment according to the present invention may be referred to as "Stateful Inspection".

Through monitoring the dynamic negotiation, the inspection engine 108 preferably discovers the result of the negotiation. For example, the inspection engine 108 preferably determines the application port (or data port), which is the dynamic port that will become the port of the data session. Once the inspection engine 108 observes the dynamic negotiation and discovers what the new port number is going to be, then the inspection engine preferably advises the forwarding engines 106 and 110 of the new application port to use for the data session. The forwarding engines 106 and 110 then place the application port number in their respective database so that appropriate policies, for example, may be applied to the data being transferred during the data session.

A policing engine, which may be similar to, for example, the policing engine 80 of FIG. 3, may be used to apply the policies (services levels) to the data. The policies may include one or more of, but are not limited to, Quality of Service (QoS) level, statistics group, the policing, and the like, whatever is programmed in the policy matrix of the respective forwarding engine. When the control session terminates and the host and the server switch over to the data session, the packet switching node preferably has pre-configured itself to treat the incoming traffic (of the data session) appropriately.

The service level for the session preferably is configured upon a database in each forwarding engine used during the data session. The database preferably contains the policy matrix, which contains policy parameters, such as, for example, QoS, statistics group, policing, bandwidth and/or provisioning. For example, the policy matrix may allow for keeping track of accounting number for billing purposes and/or keeping track of a data rate for, e.g., policing purposes. Accordingly, in the forwarding engines, the dynamically negotiated application port number (and therefore the session using the port number) preferably is associated with the parameters in the policy matrix.

The packet switching nodes in this or other embodiments may include additional inspection engines to support additional forwarding engines since a single inspection engine may be overwhelmed by multiple dynamic negotiations of applications port numbers it needs to monitor.

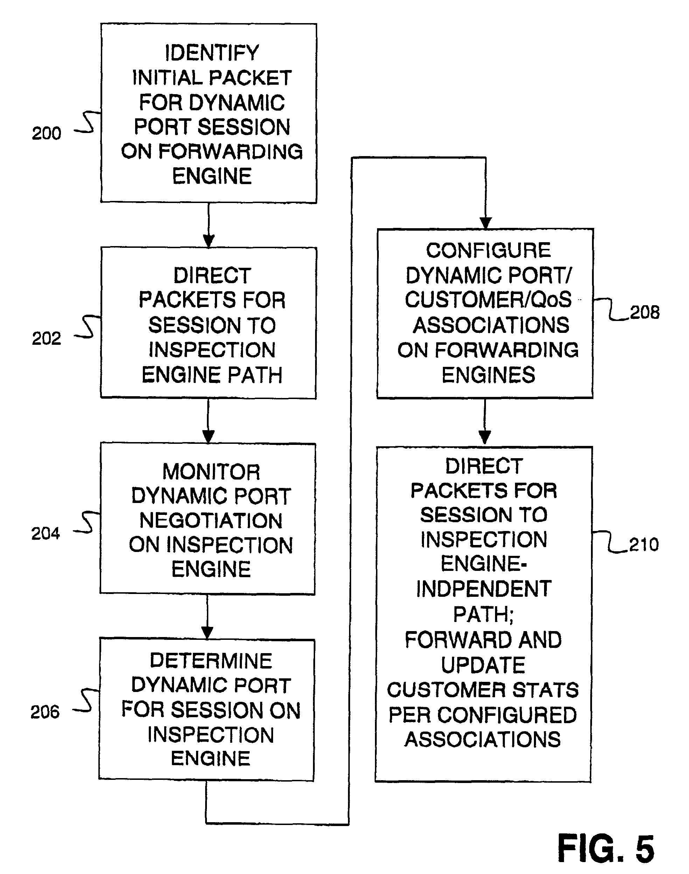

FIG. 5 is a flow diagram of dynamic application port negotiation in an embodiment according to the present invention. A packet switching node, such as, for example, the packet switching node 102, receives packets from a host or a server, such as, for example, the host 100 or server 104 of FIG. 1. In the packet switching node, a forwarding engine, such as, for example, the forwarding engine 106 or the forwarding engine 110 receives and forwards the packets.

One or more of the received packets may belong to a control session in which the application port number is to be assigned dynamically (i.e., a dynamic port session). As shown in step 200 of FIG. 5, the forwarding engine preferably identifies an initial packet (e.g., the first packet) that has a well-known port number indicative of the initiation of a dynamic application port number negotiation Once the initial packet is determined, as shown in step 202 of FIG. 2, the forwarding engine preferably directs packets for the control session to an inspection engine, such as, for example, the inspection engine 108 of FIG. 1, on an inspection engine path (a first path).

In step 204, the inspection engine preferably monitors dynamic port negotiation. In step 206, the inspection engine preferably determines an application port number for a data session through monitoring.

In step 208, the forwarding engines preferably are configured with a service level for the session. The service level configuration may include, for example, but is not limited to, associating the dynamic application port number on the forwarding engines with one or more of a QoS, policing, statistics group, and the like, and/or a customer.

In step 210, the packets belonging to the dynamic port session preferably are directed to the forwarding engines on an inspection engine-independent path (a second path). The forwarding engines preferably forward the packets on the second path, and updates customer statistics per configured associations. For example, the customer statistics may include length of a phone call, local or long distance, and may include billing treatment and provisioning used for accounting purposes. When a customer purchases a service, which allows him to send a predetermined amount of data, the amount of data being sent by the customer should be tracked so that the customer does not send more data than he is allowed to. If and when the customer goes over his service limit, a corrective action, such as, for example, limiting his bandwidth, may be needed to be taken.

It will be appreciated by those of ordinary skill in the art that the invention can be embodied in other specific forms without departing from the spirit or essential character hereof. The present description is therefore considered in all respects to be illustrative and not restrictive. The scope of the invention is indicated by the appended claims, and all changes that come within the meaning and range of equivalents thereof are intended to be embraced therein.

## Claims

1. A packet switching node for receiving and transmitting packets for one or more sessions, the packet switching node comprising:
an inspection engine for determining an application port by monitoring a first session in which the application port is negotiated; and
first and second forwarding engines interconnected on a first path dependent on the inspection engine and a second path independent of the inspection engine,
wherein the first forwarding engine identifies the first session, and directs the first session to the first path.

2. The packet switching node according to claim 1, wherein the application port is dynamically negotiated between a server node and a host node.

3. The packet switching node according to claim 1, wherein the first forwarding engine forwards a second session, for which the application port has been negotiated, over the second path.

4. The packet switching node according to claim 1, wherein the first forwarding engine identifies a third session with a statically assigned application port, and wherein the first forwarding engine forwards the third session over the second path.

5. The packet switching node according to claim 1, wherein the packets are forwarded via the inspection engine and at least one of the forwarding engines on the first path, and the packets are forwarded via at least one of the forwarding engines but not via the inspection engine on the second path.

6. The packet switching node according to claim 3, wherein the inspection engine configures a service level for the second session on the first forwarding engine.

7. The packet switching node according to claim 6, wherein the inspection engine configures the service level for the first session on the second forwarding engine.

8. The packet switching node according to claim 7, wherein the configuration of the service level includes association of the application port with a quality of service (QoS) on at least one of the forwarding engines.

9. The packet switching node according to claim 7, wherein the configuration of the service level includes association of the application port with a customer on at least one of the forwarding engines.

10. The packet switching node according to claim 7, wherein the configuration of the service level includes association of the application port with a statistics group on at least one of the forwarding engines.

11. The packet switching node according to claim 10, wherein the statistics group comprises amount of traffic, size of file transfer, time of day, customer identification or number of bytes.

12. The packet switching node according to claim 10, wherein the statistics group is used to perform billing, auditing, network management or traffic profiling.

13. A method of assigning an application port to one or more sessions, the method comprising the steps of:
receiving a plurality of packets for the sessions on a first forwarding engine;
identifying a first session in which the application port is to be negotiated;
directing the first session to an inspection engine; and
determining the application port for a second session by monitoring the application port negotiation using the inspection engine.

14. The method of assigning an application port according to claim 13, the method further comprising the step of:
forwarding the second session to a second forwarding engine without going through the inspection engine.

15. The method of assigning an application port according to claim 13, the method further comprising the steps of:
identifying a third session in which the application port is statically assigned; and
forwarding the third session to a second forwarding engine without going through the inspection engine.

16. The method of assigning an application port according to claim 13, the method further comprising the step of:
configuring a service level for the second session on the first forwarding engine.

17. The method of assigning an application port according to claim 16, the method further comprising the step of:
configuring the service level for the second session on a second forwarding engine.

18. The method of assigning an application port according to claim 17, wherein the steps of configuring a service level comprise the step of associating the application port with quality of service (QoS).

19. The method of assigning an application port according to claim 17, wherein the steps of configuring a service level comprise the step of associating the application port with a customer.

20. The method of assigning an application port according to claim 17, wherein the steps of configuring a service level comprises the step of associating the application port with a statistics group.

21. The packet switching node according to claim 20, wherein the statistics group comprises amount of traffic, size. of file transfer, time of day, customer identification or number of bytes.

22. The packet switching node according to claim 20, wherein the statistics group is used to perform billing, auditing, network management or traffic profiling.

23. A packet switching node for receiving and transmitting packets for one or more sessions, the packet switching node comprising:
inspection means for determining an application port by monitoring a first session in which the application port is negotiated; and
first and second forwarding means interconnected on a first path dependent on the inspection means and a second path independent of the inspection means,
wherein the first forwarding means identifies the first session, and directs the first session to the first path.

24. The packet switching node according to claim 23, wherein the application port is dynamically negotiated between a server node and a host node.

25. The packet switching node according to claim 23, wherein the first forwarding means forwards a second session, for which the application port has been negotiated, over the second path.

26. The packet switching node according to claim 23, wherein the first forwarding means identifies a third session with a statically assigned application port, and wherein the first forwarding means forwards the third session over the second path.

27. The packet switching node according to claim 23, wherein the packets are forwarded via the inspection means and at least one of the forwarding means on the first path, and the packets are forwarded via at least one of the forwarding means but not via the inspection means on the second path.

28. The packet switching node according to claim 25, wherein the inspection means configures a service level for the second session on the first forwarding means.

29. The packet switching node according to claim 28, wherein the inspection means configures the service level for the first session on the second forwarding means.

30. The packet switching node according to claim 28, wherein the configuration of the service level includes association of the application port with a quality of service (QoS) on at least one of the forwarding means.

31. The packet switching node according to claim 28, wherein the configuration of the service level includes association of the application port with a customer on at least one of the forwarding means.

32. The packet switching node according to claim 28, wherein the configuration of the service level includes association of the application port with a statistics group on at least one of the forwarding means.

33. The packet switching node according to claim 32, wherein the statistics group comprises amount of traffic, size of file transfer, time of day, customer identification or number of bytes.

34. The packet switching node according to claim 32, wherein the statistics group is used to perform billing, auditing, network management or traffic profiling.
